# EUROPEAN PATENT SPECIFICATION

(11) **EP 4 228 049 B1**
(45) Date of publication and mention of the grant of the patent: **15.10.2025**
(21) Application number: 20958020.8
(22) Date of filing: 20.10.2020
(51) Int. Cl.: H01M 10/0587, H01M 10/058

(54) **BATTERY AND ELECTRONIC DEVICE HAVING SAME**
BATTERIE UND ELEKTRONISCHE VORRICHTUNG DAMIT
BATTERIE ET DISPOSITIF ÉLECTRONIQUE LA COMPORTANT

(43) Date of publication of application: 16.08.2023
(73) Proprietor: Ningde Amperex Technology Limited, Ningde, Fujian 352100 (CN)
(72) Inventor: ZENG, Qiao, Ningde, Fujian 352100 (CN); TAO, Xinghua, Ningde, Fujian 352100 (CN); XIE, Zaibin, Ningde, Fujian 352100 (CN)
(74) Representative: Icosa
(86) International application number: PCT/CN2020/122221
(87) International publication number: WO 2022/082437

(56) References cited:
- WO-A1-2011/126719
- CN-A- 102 823 053
- CN-A- 104 009 259
- CN-A- 108 448 060
- CN-A- 111 261 948
- CN-U- 203 119 037
- US-A- 3 153 180
- US-A1- 2007 180 686
- US-A1- 2007 180 686
- US-A1- 2011 247 204

## Description

### TECHNICAL FIELD

This application relates to the field of energy storage technologies, and in particular, to a battery and an electronic apparatus containing such battery.

### BACKGROUND

With popularization of consumer electronic products such as notebook computers, mobile phones, handheld game consoles, tablet computers, mobile power supplies, and drones, requirements for batteries are increasingly stringent. Currently, batteries are mainly of wound and laminated structures. For a common battery of the wound structure, a positive electrode plate, a negative electrode plate, and two separators need to be stacked into a four-layer structure, and then wound around a winding shaft. After the winding is complete, the winding shaft needs to be removed to obtain a battery cell.

However, after the winding shaft is removed, a hollow space is left at a winding starting end of the battery cell, resulting in low internal space utilization and energy density loss of the battery. In addition, tails of the positive electrode plate and the negative electrode plate need to be welded with tabs to conduct electrons, and the tabs need to be welded to metal sheets. The US patent US 3153180 discloses a battery comprising a housing and a battery cell accommodated in the housing with a first and a second conductive member forming a conductive structure, the electrode plates and the separator being wound around the conductive structure. The US patent application US 20070180686 discloses a battery comprising two electrode plates separated by a separator connected to a conductive structure comprising a first and a second conductive member. The international patent application WO 2011126719 discloses a battery wherein the electrodes are wrapped around a mandrel.

### SUMMARY

In view of this, it is necessary to provide a battery capable of improving internal space utilization and energy density of the battery.

In addition, it is also necessary to provide an electronic apparatus containing the foregoing battery. The solution is described in the appended claims.

This application provides a battery including a housing and a battery cell accommodated in the housing. The housing includes a first housing body and a second housing body electrically isolated from each other. The second housing body is mounted on the first housing body. The battery cell includes a first electrode plate, a second electrode plate, and a separator located between the first electrode plate and the second electrode plate. The battery further includes a first conductive member and a second conductive member accommodated in the housing and electrically isolated from each other, where the first conductive member electrically connects the first electrode plate and the first housing body, and the second conductive member electrically connects the second electrode plate and the second housing body. The first conductive member and the second conductive member form a conductive structure, and the first electrode plate, the separator, and the second electrode plate are wound around the conductive structure to form the battery cell. A starting end of the first electrode plate and a starting end of the second electrode plate are located between the first conductive member and the second conductive member.

In some embodiments of this application, the first electrode plate and the second electrode plate extend in a substantially same direction in a gap between the first conductive member and the second conductive member.

In some embodiments of this application, the first electrode plate includes a first current collector. The first current collector includes a first uncoated region and a first coated region, the first uncoated region is provided with no first active substance layer, and the first coated region is provided with the first active substance layer. The first conductive member is electrically connected to the first uncoated region. The second electrode plate includes a second current collector. The second current collector includes a second uncoated region and a second coated region, the second uncoated region is provided with no second active substance layer, and the second coated region is provided with the second active substance layer. The second conductive member is electrically connected to the second uncoated region.

In some embodiments of this application, the first conductive member includes a first connecting surface. The second conductive member includes a second connecting surface facing toward the first connecting surface. The first connecting surface is configured to be electrically connected to the first uncoated region. The second connecting surface is configured to be electrically connected to the second uncoated region.

In some embodiments of this application, the first conductive member further includes a first side surface connected to the first connecting surface. The second conductive member further includes a second side surface connected to the second connecting surface. The first side surface and the second side surface jointly form an outer side surface of the conductive structure. A part of the first uncoated region and a part of the second uncoated region surround the outer side surface of the conductive structure.

In some embodiments of this application, both the first uncoated region surrounding the outer side surface of the conductive structure and the second uncoated region surrounding the outer side surface of the conductive structure have a surface area smaller than or equal to that of the outer side surface of the conductive structure.

In some embodiments of this application, the separator is also located between the first connecting surface and the second connecting surface. The separator is configured to electrically isolate the first conductive member from the second conductive member.

In some embodiments of this application, an insulating glue layer is disposed between the first connecting surface and the second connecting surface. The insulating glue layer is configured to electrically isolate the first conductive member from the second conductive member.

In some embodiments of this application, in a direction of a winding axis of the battery cell, a width of the first uncoated region is equal to a width of the first coated region, and/or a width of the second uncoated region is equal to a width of the second coated region.

In some embodiments of this application, the first conductive member includes a first end portion electrically connected to the first housing body and a second end portion disposed opposite to the first end portion. The second conductive member includes a third end portion electrically connected to the second housing body and a fourth end portion disposed opposite to the third end portion. In a direction of a winding axis of the battery cell, the first end portion extends beyond the fourth end portion and the third end portion extends beyond the second end portion.

In some embodiments of this application, a height of the first end portion extending beyond the fourth end portion is less than 2 mm, and a height of the third end portion extending beyond the second end portion is less than 2 mm.

In some embodiments of this application, the battery further includes a first fixed member. The first fixed member is disposed between the first housing body and the battery cell. The first fixed member is configured to electrically isolate the fourth end portion from the first housing body. The first end portion passes through the first fixed member and is electrically connected to the first housing body.

In some embodiments of this application, the battery further includes a second fixed member. The second fixed member is disposed between the second housing body and the battery cell. The second fixed member is configured to electrically isolate the second end portion from the second housing body. The third end portion passes through the second fixed member and is electrically connected to the second housing body.

In some embodiments of this application, in a direction of a winding axis of the battery cell, at least one of the first conductive member and the second conductive member is provided with a positioning hole.

In some embodiments of this application, an overall shape of a cross section of the conductive structure is a regular geometric shape.

In some embodiments of this application, the overall shape of the cross section of the conductive structure is a rectangle, a hexagon, a circle, or an ellipse.

This application further provides an electronic apparatus including the foregoing battery.

In this application, the conductive structure is disposed, and the first electrode plate, the separator, and the second electrode plate can be wound around the conductive structure during preparation. Therefore, the conductive structure can replace a winding shaft in the prior art, and the conductive structure does not need to be removed after the battery cell is formed through winding. In this way, the conductive structure can be used as a tab to lead out polarity of the electrode plate. The conductive structure can fully use a hollow space left at a winding starting end of the battery cell after the winding shaft is removed in the prior art, without additionally occupying a space between an outer ring of the battery cell and the housing, thereby improving internal space utilization of the battery and improving energy density of the battery. In addition, because the starting end of the first electrode plate and the starting end of the second electrode plate are located between the first conductive member and the second conductive member, when the winding is performed around the conductive structure, the active substance layer of the first electrode plate can fully correspond to the active substance layer of the second electrode plate, thus reducing the risk of lithium precipitation of the electrode plates and improving safety of the battery.

### BRIEF DESCRIPTION OF DRAWINGS

FIG. 1 is a cross-sectional view of a battery according to an embodiment of this application.
FIG. 2 is an exploded view of the battery shown in FIG. 1.
FIG. 3A is a schematic diagram of a first electrode plate and a second electrode plate of the battery shown in FIG. 1 being wound around a conductive structure.
FIG. 3B is a schematic diagram of a first electrode plate and a second electrode plate of the battery shown in FIG. 1 being unwound.
FIG. 4 is a schematic diagram of the conductive structure shown in FIG. 3A.
FIG. 5 is a schematic diagram of the conductive structure shown in FIG. 3A in another embodiment.
FIG. 6 is a schematic diagram of the conductive structure shown in FIG. 3A in still another embodiment.
FIG. 7 is a schematic diagram of the conductive structure shown in FIG. 3A in yet another embodiment.
FIG. 8 is a schematic diagram of the conductive structure shown in FIG. 3A in yet another embodiment.
FIG. 9 is a schematic diagram of the conductive structure shown in FIG. 3A in yet another embodiment.
FIG. 10 is a schematic diagram of the conductive structure shown in FIG. 3A in yet another embodiment.
FIG. 11 is a schematic diagram of the first electrode plate shown in FIG. 3B from another perspective.
FIG. 12 is a schematic diagram of the second electrode plate shown in FIG. 3B from another perspective.
FIG. 13 is a schematic structural diagram of an electronic apparatus according to an embodiment of this application.

**Reference signs of main components:**

| | |
|---|---|
| housing | 10 |
| first housing body | 11 |
| second housing body | 12 |
| adhesive layer | 13 |
| battery cell | 20 |
| first electrode plate | 21 |
| second electrode plate | 22 |
| separator | 23 |
| conductive structure | 30 |
| first conductive member | 31 |
| second conductive member | 32 |
| positioning hole | 33 |
| first fixed member | 40 |
| second fixed member | 50 |
| insulator | 60 |
| battery | 100 |
| main housing body | 110 |
| cover | 111 |
| electronic apparatus | 200 |
| first current collector | 210 |
| first coated region | 211 |
| first uncoated region | 212 |
| first active substance layer | 213 |
| second current collector | 220 |
| second coated region | 221 |
| second active substance layer | 223 |
| outer side surface | 300 |
| first connecting surface | 311 |
| first side surface | 312 |
| first end portion | 313 |
| second end poertion | 314 |
| second connecting surface | 321 |
| second side surface | 322 |
| third end portion | 323 |
| fourth end portion | 324 |
| first opening | 400 |
| second opening | 500 |
| width | W₁, W₂. W₃, W₄ |
| height | h₁, h₂ |

This application will be further described with reference to the accompanying drawings in the following specific embodiments.

### DESCRIPTION OF EMBODIMENTS

The following clearly and completely describes the technical solutions in embodiments of this application with reference to the accompanying drawings in the embodiments of this application. Apparently, the described embodiments are only some but not all of the embodiments of this application.

Unless otherwise defined, all technical and scientific terms used herein shall have the same meanings as commonly understood by persons skilled in the art to which this application belongs. The terms used herein in the specification of this application are merely intended to describe specific embodiments but not intended to limit this application.

The following describes in detail some embodiments of this application with reference to the accompanying drawings. Provided that there is no conflict, the following embodiments and features in the embodiments may be combined with each other.

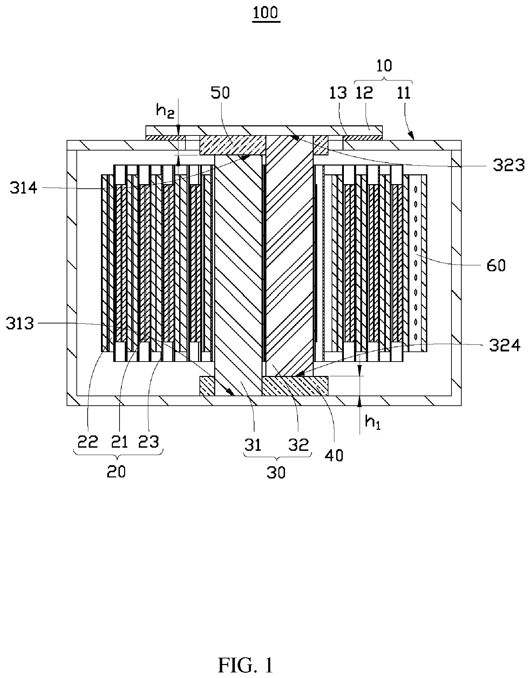

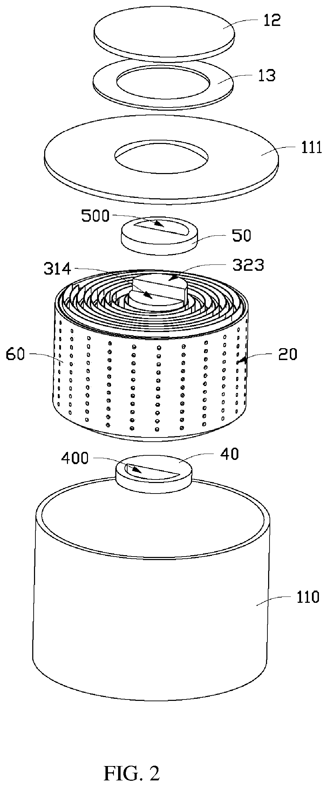

Refer to FIG. 1 and FIG. 2. An embodiment of this application provides a battery 100. The battery 100 of this application may be a lithium secondary battery, including a lithium metal secondary battery, a lithium-ion secondary battery, a lithium polymer secondary battery, and a lithium-ion polymer secondary battery. In other embodiments, the battery 100 may alternatively be all types of primary batteries, secondary batteries, fuel batteries, or solar batteries.

The battery 100 includes a housing 10 and a battery cell 20 accommodated in the housing 10. The housing 10 includes a first housing body 11 and a second housing body 12 electrically isolated from each other, and the second housing body 12 is mounted on the first housing body 11. The battery cell 20 includes a first electrode plate 21, a second electrode plate 22, and a separator 23 located between the first electrode plate 21 and the second electrode plate 22. The separator 23 is configured to prevent direct contact between the first electrode plate 21 and the second electrode plate 22, to prevent short circuit of the battery cell 20.

The battery 100 further includes a first conductive member 31 and a second conductive member 32 accommodated in the housing 10 and electrically isolated from each other. The first conductive member 31 electrically connects the first electrode plate 21 and the first housing body 11, and the second conductive member 32 electrically connects the second electrode plate 22 and the second housing body 12. Therefore, the first electrode plate 21 may be electrically connected to the first housing body 11 through the first conductive member 31, so that the first housing body 11 and the first electrode plate 21 have a same polarity; and the second electrode plate 22 may be electrically connected to the second housing body 12 through the second conductive member 32, so that the second housing body 12 and the second electrode plate 22 have a same polarity. In this way, electrical connection between the electrode plates and the housing 10 can be implemented, so that the polarities of the first electrode plate 21 and the second electrode plate 22 can be led out through the first housing body 11 and the second housing body 12 respectively.

The first conductive member 31 and the second conductive member 32 form a conductive structure 30, and the first electrode plate 21, the separator 23, and the second electrode plate 22 are wound around the conductive structure 30 to form the battery cell 20. Both a starting end of the first electrode plate 21 and a starting end of the second electrode plate 22 are located between the first conductive member 31 and the second conductive member 32.

In this application, the conductive structure 30 is disposed, and the first electrode plate 21, the separator 23, and the second electrode plate 22 can be wound around the conductive structure 30 during preparation. Therefore, the conductive structure 30 can replace a winding shaft in the prior art. The conductive structure 30 does not need to be removed after the battery cell 20 is formed through winding. In this way, the conductive structure 30 can be used as a tab to lead out polarity of the electrode plate, and the conductive structure 30 can fully use a hollow space left at a winding starting end of the battery cell 20 after the winding shaft is removed in the prior art. As compared with a process of welding tabs at tails of electrode plates and then welding the tabs to metal sheets in the prior art, in this application, it is unnecessary to additionally weld tabs at tails of the electrode plates, apply tab adhesive for protection, or welding tabs to metal sheets. This avoids the prior-art problem of tabs occupying a space between an outer ring of a battery cell and a housing body, and improves internal space utilization of the battery 100, thereby improving energy density of the battery 100. In addition, because both the starting end of the first electrode plate 21 and the starting end of the second electrode plate 22 are located between the first conductive member 31 and the second conductive member 32, when the winding is performed around the conductive structure 30, the active substance layer of the first electrode plate 21 can fully correspond to the active substance layer of the second electrode plate 22, thus reducing the risk of lithium precipitation of the electrode plates and improving safety of the battery 100.

Moreover, because the conductive structure 30 does not need to be removed after the battery cell 20 is formed through winding, this can avoid the prior-art problem of the separator 23 being pulled out or dislocated due to the winding shaft being removed, thus avoiding a short circuit caused by direct contact between the first electrode plate 21 and the second electrode plate 22, and further improving the safety of the battery 100. The conductive structure 30 can also provide support when the center of the housing 10 sinks and deforms, preventing the first electrode plate 21 and second electrode plate 22 inside from being deformed under the effect of the housing 10, thereby improving quality of the battery 100.

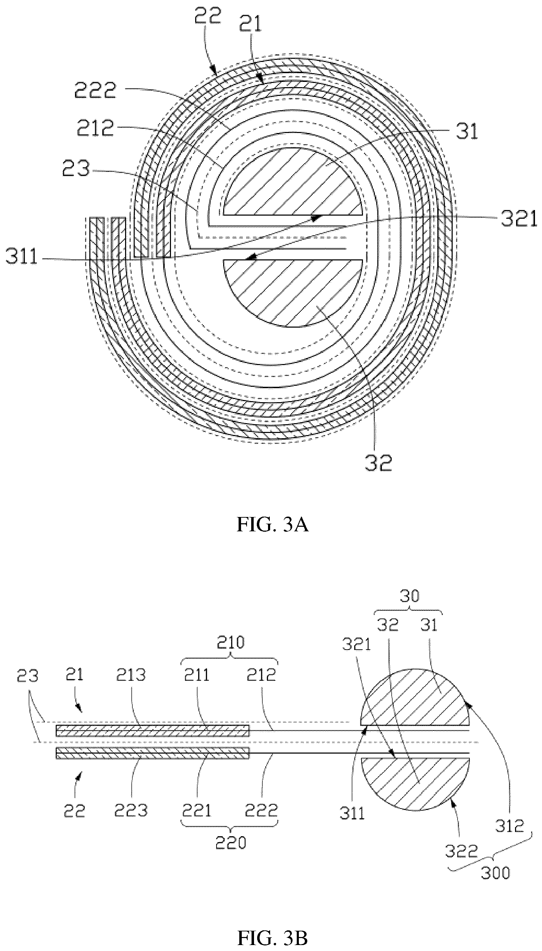

Refer to FIG. 3A and FIG. 3B together. In an embodiment, the first electrode plate 21 includes a first current collector 210. The first current collector 210 includes a first uncoated region 212 and a first coated region 211. The first uncoated region 212 is provided with no first active substance layer 213, and the first coated region 211 is provided with the first active substance layer 213. The first conductive member 31 is electrically connected to the first uncoated region 212. Therefore, the polarity of the first electrode plate 21 can be led out to the first conductive member 31 through the first uncoated region 212. The second electrode plate 22 includes a second current collector 220. The second current collector 220 includes a second uncoated region 222 and a second coated region 221 connected to the second uncoated region 222, the second uncoated region 222 is provided with no second active substance layer 223, and the second coated region 221 is provided with the second active substance layer 223. The second conductive member 32 is electrically connected to the second uncoated region 222. Therefore, the polarity of the second electrode plate 22 can be led out to the second conductive member 32 through the second uncoated region 222. As shown in FIG. 3A, to reduce the risk of lithium precipitation, the first active substance layer 213 may fully correspond to the second active substance layer 223.

As shown in FIG. 3A and FIG. 3B, the first conductive member 31 includes a first connecting surface 311. The second conductive member 32 includes a second connecting surface 321 facing toward the first connecting surface 311. Both the starting end of the first electrode plate 21 (that is, part of the first uncoated region 212) and the starting end of the second electrode plate 22 (that is, part of the second uncoated region 222) are located in a gap between the first connecting surface 311 and the second connecting surface 321. The first connecting surface 311 is configured to be electrically connected to the first uncoated region 212, for example, the first uncoated region 212 may be directly fitted to the first connecting surface 311. The second connecting surface 321 is configured to be electrically connected to the second uncoated region 222, for example, the second uncoated region 222 may be directly fitted to the second connecting surface 321.

The first conductive member 31 further includes a first side surface 312 connected to the first connecting surface 311. The second conductive member 32 further includes a second side surface 322 connected to the second connecting surface 321. The first side surface 312 and the second side surface 322 jointly form an outer side surface 300 of the conductive structure 30. Except that part of the first uncoated region 212 and part of the second uncoated region 222 are located in the gap between the first connecting surface 311 and the second connecting surface 321, the other part of the first uncoated region 212 and the other part of the second uncoated region 222 surround the outer side surface 300 of the conductive structure 30. Both the first uncoated region 212 surrounding the outer side surface 300 of the conductive structure 30 and the second uncoated region 222 surrounding the outer side surface 300 of the conductive structure 30 have a surface area smaller than or equal to that of the outer side surface 300 of the conductive structure 30.

As shown in FIG. 3A and FIG. 3B, in an embodiment, the first electrode plate 21 and the second electrode plate 22 extend in a same direction in a gap between the first conductive member 31 and the second conductive member 32. Extending in a same direction described herein should be understood as including a case of extending in a substantially same direction. This is because in an actual scenario, extending directions of the first electrode plate 21 and the second electrode plate 22 in the gap between the first conductive member 31 and the second conductive member 32 may not be exactly the same, but have a deviation. Further, the first electrode plate 21 and the second electrode plate 22 may be wound around the outer side surface 300 of the conductive structure 30 in a same direction. In this way, one of the first uncoated region 212 and the second uncoated region 222 can be located at an inner ring of the battery cell 20, and the other of the first uncoated region 212 and the second uncoated region 222 can be located at the second ring of the battery cell 20. For example, when the first electrode plate 21 and the second electrode plate 22 are wound around the outer side surface 300 of the conductive structure 30 clockwise, the first uncoated region 212 is located at an inner ring of the battery cell 20, and the second uncoated region 222 is located at the second ring of the battery cell 20. It can be understood that when the first electrode plate 21 and the second electrode plate 22 are wound around the outer side surface 300 of the conductive structure 30 counterclockwise, the second uncoated region 222 is located at an inner ring of the battery cell 20, and the first uncoated region 212 is located at the second ring of the battery cell 20. In this embodiment, the first electrode plate 21 and the second electrode plate 22 are a positive electrode plate and a negative electrode plate respectively, and the first electrode plate 21 and the second electrode plate 22 are wound around the outer side surface 300 of the conductive structure 30 counterclockwise, so that the second uncoated region 222 is located at an inner ring of the battery cell 20 (that is, the negative electrode plate is located at the inner ring). It can be understood that in other embodiments, the first electrode plate 21 and the second electrode plate 22 may alternatively be a negative electrode plate and a positive electrode plate respectively, which is not limited in this application.

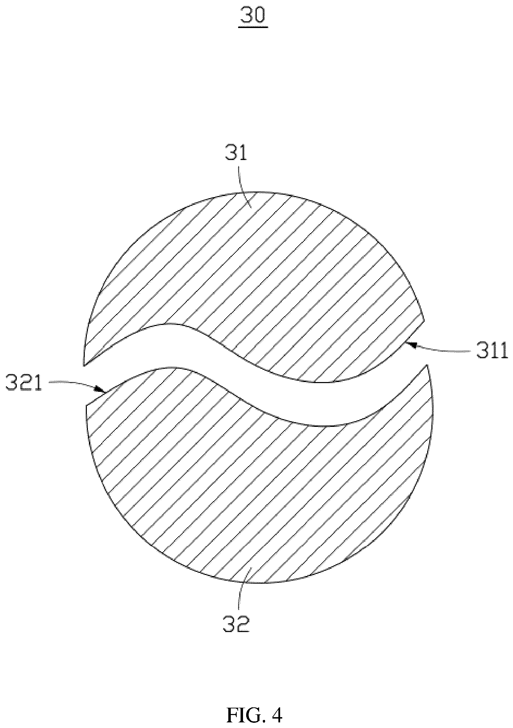

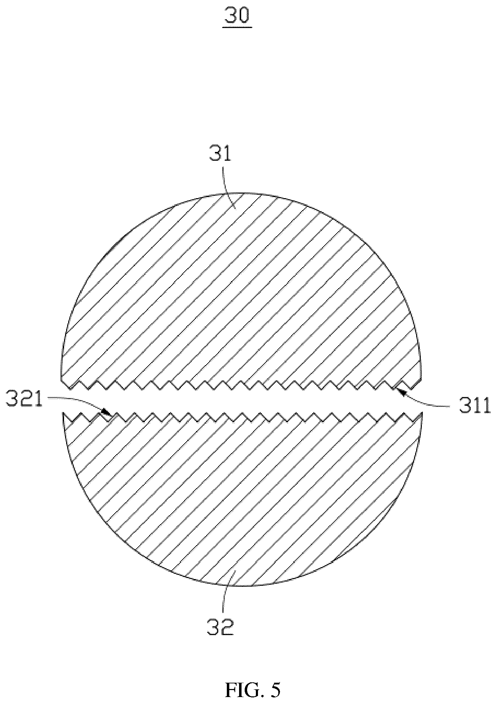

The first connecting surface 311 and the second connecting surface 321 may be set to match in shape, that is, the first connecting surface 311 and the second connecting surface 321 can be spliced together. For example, as shown in FIG. 3A and FIG. 3B, the first connecting surface 311 and the second connecting surface 321 may be planes parallel to each other. For another example, as shown in FIG. 4, the first connecting surface 311 and the second connecting surface 321 may alternatively be protruding and recessed curved surfaces respectively. For another example, as shown in FIG. 5, both the first connecting surface 311 and the second connecting surface 321 may alternatively be zigzag surfaces, with peaks and valleys of the two zigzag surfaces in one-to-one correspondence. This reduces the gap between the first connecting surface 311 and the second connecting surface 321, avoiding wasting a space between the first conductive member 31 and the second conductive member 32, thereby further improving the internal space utilization of the battery 100.

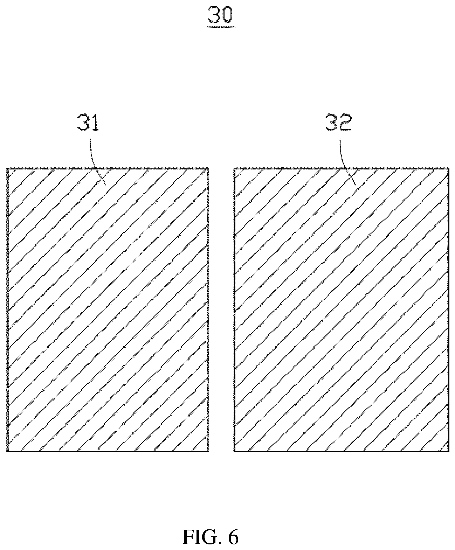

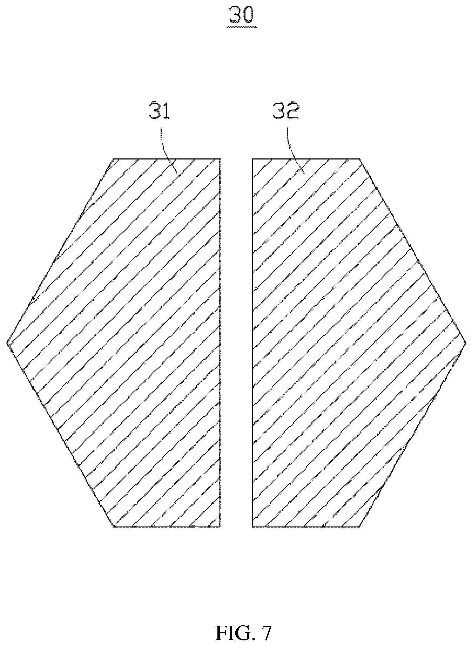

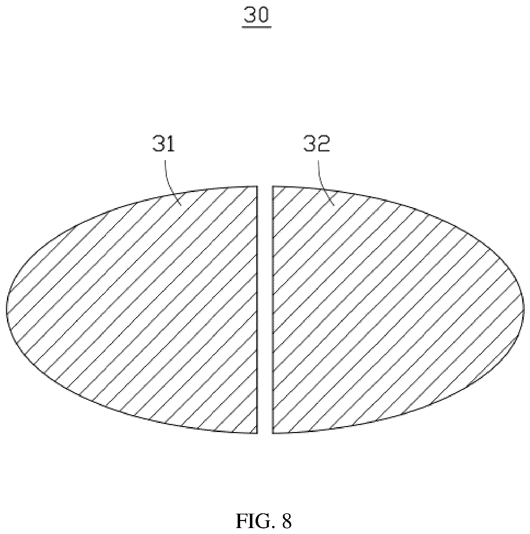

In an embodiment, an overall shape of a cross section of the conductive structure 30 is a regular geometric shape. The overall shape of the cross section of the conductive structure 30 may be set according to a shape required by the battery cell 20, that is, after the battery cell 20 is formed through winding around the conductive structure 30, the battery cell 20 can be in a shape substantially the same as that of the cross section of the conductive structure 30. As shown in FIG. 3A to FIG. 5, the overall shape of the cross section of the conductive structure 30 may be a circle. As shown in FIG. 6 to FIG. 8, in other embodiments, the overall shape of the cross section of the conductive structure 30 may alternatively be a rectangle, a hexagon, or an ellipse.

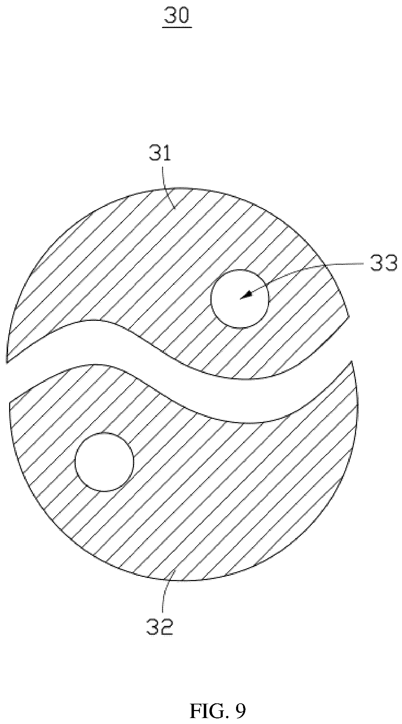

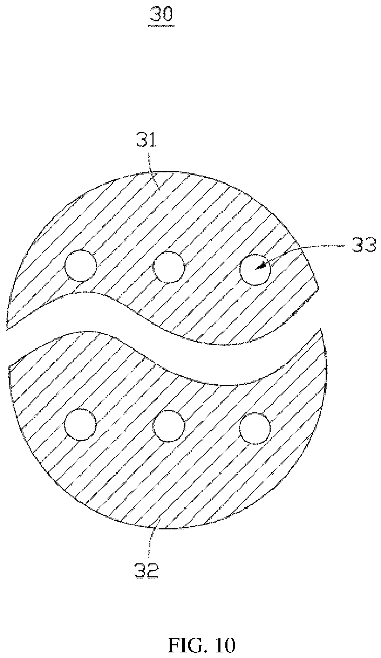

Refer to FIG. 9. In a direction of a winding axis of the battery cell 20, at least one of the first conductive member 31 and the second conductive member 32 may be provided with a positioning hole 33. The first conductive member 31 and/or the second conductive member 32 may be mounted on a winding machine (not shown in the figure) through the positioning hole 33. When the winding machine is started, the winding machine can drive the first conductive member 31 or the second conductive member 32 to rotate to perform winding operations. In addition, the provision of the positioning hole 33 can also reduce a weight of the first conductive member 31 and/or the second conductive member 32, thereby reducing an overall weight of the battery 100. As shown in FIG. 9, both the first conductive member 31 and the second conductive member 32 are provided with one positioning hole 33. Refer to FIG. 10. In another embodiment, to improve firmness of connection between the winding machine and the first conductive member 31 and the second conductive member 32, the first conductive member 31 and the second conductive member 32 each may alternatively be provided with a plurality of positioning holes 33.

As shown in FIG. 3A and FIG. 3B, in an embodiment, the separator 23 is also located between the first connecting surface 311 and the second connecting surface 321. The separator 23 is configured to electrically isolate the first conductive member 31 from the second conductive member 32, and thus no additional insulation part needs to be added. Certainly, in another embodiment, to electrically isolate the first conductive member 31 from the second conductive member 32, an insulating glue layer (not shown in the figure) may alternatively be disposed between the first connecting surface 311 and the second connecting surface 321. A material of the insulating glue layer may include at least one of polypropylene (PP), polyethylene terephthalate (PET), polystyrene (PS), polyimide (PI), nylon, or polytetrafluoroethylene (PTFE).

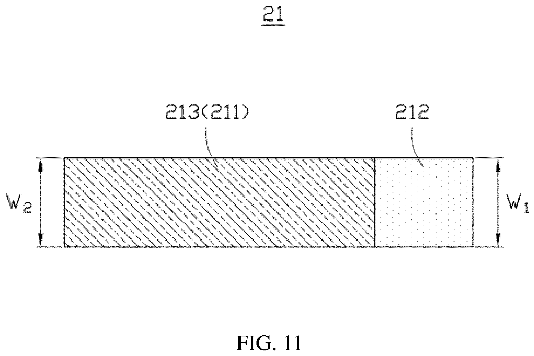

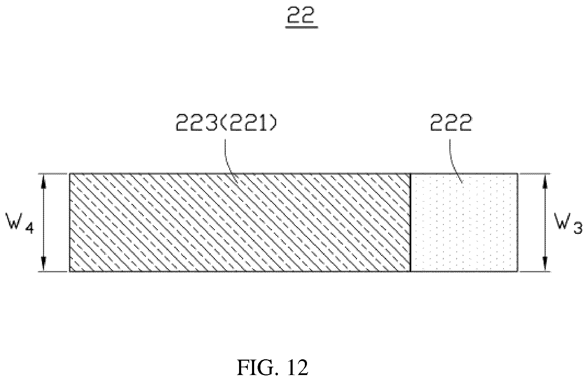

As shown in FIG. 11 and FIG. 12, in an embodiment, in a direction of a winding axis of the battery cell 20, a width W₁ of the first uncoated region 212 may be equal to a width W₂ of the first coated region 211, and a width W₃ of the second uncoated region 222 may be equal to a width W₄ of the second coated region 221. The widths W₁ and W₁ are sizes of the first uncoated region 212 and the second uncoated region 222 in the direction of the winding axis of the battery cell 20. Therefore, during preparation of the electrode plates, the current collectors do not need to be cut, which simplifies the preparation process of the electrode plates, and is conducive to reducing stress generated on the electrode plates during winding.

As shown in FIG. 1, in an embodiment, the first conductive member 31 includes a first end portion 313 electrically connected to the first housing body 11 and a second end portion 314 disposed opposite the first end portion 313. The second conductive member 32 includes a third end portion 323 electrically connected to the second housing body 12 and a fourth end portion 324 disposed opposite the third end portion 323. In the direction of the winding axis of the battery cell 20, the first end portion 313 extends beyond the fourth end portion 324, so that the first conductive member 31 is electrically connected to the first housing body 11 through the first end portion 313; and the third end portion 323 extends beyond the second end portion 314, so that the second conductive member 32 is electrically connected to the second housing body 12 through the third end portion 323. Further, a height h₁ of the first end portion 313 extending beyond the fourth end portion 324 may be set to be less than 2 mm, and a height h₂ of the third end portion 323 extending beyond the second end portion 314 may be set to be less than 2 mm.

As shown in FIG. 1 and FIG. 2, the battery 100 further includes a first fixed member 40. The first fixed member 40 is disposed between the first housing body 11 and the battery cell 20. The first fixed member 40 is configured to electrically isolate the fourth end portion 324 from the first housing body 11. The first end portion 313 passes through the first fixed member 40 and is electrically connected to the first housing body 11. The first fixed member 40 is made of an insulation material, for example, at least one of polypropylene, polyethylene terephthalate, polystyrene, polyimide, nylon, or polytetrafluoroethylene. The first fixed member 40 is provided with a first opening 400 and a first groove (not shown in the figure), where the first opening 400 penetrates the first fixed member 40, and the first groove does not completely penetrate the first fixed member 40. The first end portion 313 passes through the first opening 400 and is electrically connected to the first housing body 11. The fourth end portion 324 is inserted into the first groove so as to be fastened to the first fixed member 40.

Further, the battery 100 further includes a second fixed member 50. The second fixed member 50 is disposed between the second housing body 12 and the battery cell 20. The second fixed member 50 is configured to electrically isolate the second end portion 314 from the second housing body 12. The third end portion 323 passes through the second fixed member 50 and is electrically connected to the second housing body 12. The second fixed member 50 is made of an insulation material, for example, at least one of polypropylene (PP), polyethylene terephthalate, polystyrene, polyimide, nylon, or polytetrafluoroethylene. The second fixed member 50 is provided with a second opening 500 and a second groove (not shown in the figure), where the second opening 500 penetrates the second fixed member 50, and the second groove does not completely penetrate the second fixed member 50. The third end portion 323 passes through the second opening 500 and is electrically connected to the second housing body 12. The second end portion 314 is inserted into the second groove so as to be fastened to the second fixed member 50.

As shown in FIG. 1, in an embodiment, the battery 100 further includes an insulator 60 disposed around the periphery of the battery cell 20. The insulator 60 is provided with openings (not marked in the figure). The insulator 60 is configured to prevent direct contact between the battery cell 20 and the housing 10, to prevent short circuit. In addition, when an electrolyte is injected into the housing 10, the electrolyte can fully infiltrate the battery cell through the openings provided in the insulator 60. In other words, the electrolyte better permeates into the electrode plates of the battery cell, ensuring good contact interfaces between the electrode plates and the electrolyte.

As shown in FIG. 2, in this embodiment, the first housing body 11 is provided with an accommodating space for accommodating the battery cell 20. The second housing body 12 is mounted on the first housing body 11 to close the accommodating space. In other words, the second housing body 12 may be a top cover of the housing 10. More specifically, the first housing body 11 may include a main housing body 110 and a cover 111 welded to the main housing body 110. The cover 111 is provided with an opening, and the second housing body 12 is configured to close the opening of the cover 111. The first housing body 11 and the second housing body 12 may be made of metal. For example, the first housing body 11 and the second housing body 12 may be made of steel alloy, aluminum alloy, iron alloy, copper alloy, nickel alloy, or the like. During preparation, the cover 111 of the first housing body 11 and the second housing body 12 may be made into required shapes by laser cutting, machine tool processing, or other processes. The main housing body 110 of the first housing body 11 may be made into a scour hole (that is, the accommodating space) by stamping. The cover 111 of the first housing body 11 and the second housing body 12 are bonded through an adhesive layer 13, and the adhesive layer 13 is configured to electrically isolate the first housing body 11 from the second housing body 12. In another embodiment, the first housing body 11 and the second housing body 12 may alternatively be sealed with an insulation sealing ring (not shown in the figure).

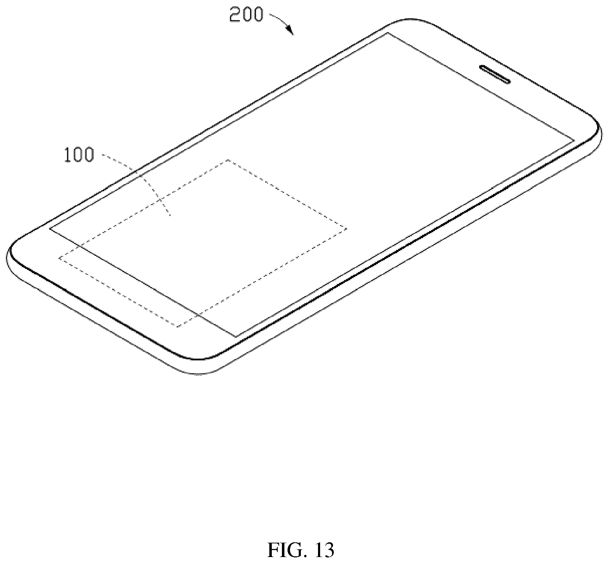

Refer to FIG. 13. This application further provides an electronic apparatus 200, where the electronic apparatus 200 includes the foregoing battery 100. In an embodiment, the electronic apparatus 200 of this application may be but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notebook, a calculator, a storage card, a portable recorder, a radio, a standby power source, a motor, an automobile, a motorcycle, a motor bicycle, a bicycle, a lighting appliance, a toy, a game console, a clock, an electric tool, a flash lamp, a camera, a large household battery, or a lithium-ion capacitor.

## Claims

1. A battery (100), comprising: a housing (10) and a battery cell (20) accommodated in the housing (10), wherein the housing (10) comprises a first housing body (11) and a second housing body (12) electrically isolated from each other, the second housing body (12) is mounted on the first housing body (11); and the battery cell (20) comprises a first electrode plate (21), a second electrode plate (22), and a separator (23) located between the first electrode plate (21) and the second electrode plate (22);
the battery (100) further comprises a first conductive member (31) and a second conductive member (32) accommodated in the housing (10) and electrically isolated from each other; and
the first conductive member (31) and the second conductive member (32) form a conductive structure (30); the first electrode plate (21), the separator (23), and the second electrode plate (22) are wound around the conductive structure (30) to form the battery cell (20); and a starting end of the first electrode plate (21) and a starting end of the second electrode plate (22) are located between the first conductive member (31) and the second conductive member (32), a starting end of the first electrode plate (21) and a starting end of the second electrode plate (22) being located between the first conductive member (31) and the second conductive member (32),
the first conductive member (31) includes a first connecting surface (311), the second conductive member (32) includes a second connecting surface (321) facing toward the first connecting surface (311), both the starting end of the first electrode plate (21) and the starting end of the second electrode plate (22) being located in a gap between the first connecting surface (311) and the second connecting surface (321),
**characterized in that** the first connecting surface (311) of the first conductive member (31) electrically connecting the starting end of the first electrode plate (21) and the first housing body (11), and the second connecting surface (321) of the second conductive member (32) electrically connects the starting end of the second electrode plate (22) and the second housing body (12).

2. The battery (100) according to claim 1, **characterized in that**, the first electrode plate (21) and the second electrode plate (22) extend in a substantially same direction in a gap between the first conductive member (31) and the second conductive member (32).

3. The battery (100) according to claim 1, **characterized in that**, the first electrode plate (21) comprises a first current collector (210), wherein the first current collector (210) comprises a first uncoated region (212) and a first coated region (211), the first uncoated region (212) is provided with no first active substance layer (223), the first coated region (211) is provided with the first active substance layer (223), and the first conductive member (31) is electrically connected to the first uncoated region (212); and
the second electrode plate (22) comprises a second current collector (220), wherein the second current collector (220) comprises a second uncoated region (222) and a second coated region (221), the second uncoated region (222) is provided with no second active substance layer (223), the second coated region (221) is provided with the second active substance layer (223), and the second conductive member (32) is electrically connected to the second uncoated region (222).

4. The battery (100) according to claim 3, **characterized in that**, the second connecting surface (321) of the second conductive member (32) is facing toward the first connecting surface (311), the first connecting surface (311) is configured to be electrically connected to the first uncoated region (212), and the second connecting surface (321) is configured to be electrically connected to the second uncoated region (222).

5. The battery (100) according to claim 3, **characterized in that**, the first conductive member (31) further comprises a first side surface (312) connected to the first connecting surface (311), the second conductive member (32) further comprises a second side surface (322) connected to the second connecting surface (321), the first side surface (312) and the second side surface (322) jointly form an outer side surface (300) of the conductive structure (30), and a part of the first uncoated region (212) and a part of the second uncoated region (222) surround the outer side surface (300) of the conductive structure (30).

6. The battery (100) according to claim 5, **characterized in that**, both the first uncoated region (212) surrounding the outer side surface (300) of the conductive structure (30) and the second uncoated region (222) surrounding the outer side surface (300) of the conductive structure (30) have a surface area smaller than or equal to that of the outer side surface (300) of the conductive structure (30).

7. The battery (100) according to claim 4, **characterized in that**, the separator (23) is located between the first connecting surface (311) and the second connecting surface (321), and the separator (23) electrically isolates the first conductive member (31) from the second conductive member (32).

8. The battery (100) according to claim 4, **characterized in that**, an insulating glue layer is disposed between the first connecting surface (311) and the second connecting surface (321), and the insulating glue layer electrically isolates the first conductive member (31) from the second conductive member (32).

9. The battery (100) according to claim 3, **characterized in that**, in a direction of a winding axis of the battery cell (20), a width of the first uncoated region (212) is equal to a width of the first coated region (211), and/or a width of the second uncoated region (222) is equal to a width of the second coated region (221).

10. The battery (100) according to claim 1, **characterized in that**, the first conductive member (31) comprises a first end portion (313) electrically connected to the first housing body (11) and a second end portion (314) disposed opposite to the first end portion (313); and the second conductive member (32) comprises a third end portion (323) electrically connected to the second housing body (12) and a fourth end portion (324) disposed opposite to the third end portion (323); wherein in a direction of a winding axis of the battery cell (20), the first end portion (313) extends beyond the fourth end portion (324) and the third end portion (323) extends beyond the second end portion (314).

11. The battery (100) according to claim 10, **characterized in that**, a height of the first end portion (313) extending beyond the fourth end portion (324) is less than 2 mm, and a height of the third end portion (323) extending beyond the second end portion (314) is less than 2 mm.

12. The battery (100) according to claim 10, **characterized in that**, the battery (100) further comprises a first fixed member (40), the first fixed member (40) is disposed between the first housing body (11) and the battery cell (20), the first fixed member (40) is configured to electrically isolate the fourth end portion (324) from the first housing body (11), and the first end portion (313) passes through the first fixed member (40) and is electrically connected to the first housing body (11).

13. The battery (100) according to claim 12, **characterized in that**, the battery (100) further comprises a second fixed member (50), the second fixed member (50) is disposed between the second housing body (12) and the battery cell (20), the second fixed member (50) is configured to electrically isolate the second end portion (314) from the second housing body (12), and the third end portion (323) passes through the second fixed member (50) and is electrically connected to the second housing body (12).

14. The battery (100) according to claim 1, **characterized in that**, in a direction of a winding axis of the battery cell (20), at least one of the first conductive member (31) or the second conductive member (32) is provided with a positioning hole (33).

15. An electronic apparatus (200), **characterized in that** the electronic apparatus (200) comprises the battery (100) according to any one of claims 1 to 14.

## Patentansprüche

1. Batterie (100), umfassend: ein Gehäuse (10) und eine Batteriezelle (20), die in dem Gehäuse (10) untergebracht sind, wobei das Gehäuse (10) einen ersten Gehäusekörper (11) und einen zweiten Gehäusekörper (12) umfasst, die voneinander elektrisch isoliert sind, der zweite Gehäusekörper (12) an dem ersten Gehäusekörper (11) montiert ist; und die Batteriezelle (20) eine erste Elektrodenplatte (21), eine zweite Elektrodenplatte (22) und einen Trenner (23) umfasst, der sich zwischen der ersten Elektrodenplatte (21) und der zweiten Elektrodenplatte (22) befindet;
die Batterie (100) ferner ein erstes leitfähiges Element (31) und ein zweites leitfähiges Element (32) umfasst, die in dem Gehäuse (10) untergebracht und voneinander elektrisch isoliert sind; und
das erste leitfähige Element (31) und das zweite leitfähige Element (32) eine leitfähige Struktur (30) bilden; die erste Elektrodenplatte (21), der Trenner (23) und die zweite Elektrodenplatte (22) um die leitfähige Struktur (30) gewickelt sind, um die Batteriezelle (20) zu bilden; und ein Anfangsende der ersten Elektrodenplatte (21) und ein Anfangsende der zweiten Elektrodenplatte (22) zwischen dem ersten leitfähigen Element (31) und dem zweiten leitfähigen Element (32) angeordnet sind, wobei sich ein Anfangsende der ersten Elektrodenplatte (21) und ein Anfangsende der zweiten Elektrodenplatte (22) zwischen dem ersten leitfähigen Element (31) und dem zweiten leitfähigen Element (32) befindet,
das erste leitfähige Element (31) eine erste Verbindungsfläche (311) enthält, das zweite leitfähige Element (32) eine zweite Verbindungsfläche (321) enthält, die der ersten Verbindungsfläche (311) zugewandt ist, wobei sich sowohl das Anfangsende der ersten Elektrodenplatte (21) als auch das Anfangsende der zweiten Elektrodenplatte (22) in einem Spalt zwischen der ersten Verbindungsfläche (311) und der zweiten Verbindungsfläche (321) befindet,
**dadurch gekennzeichnet, dass** die erste Verbindungsfläche (311) des ersten leitfähigen Elements (31) das Startende der ersten Elektrodenplatte (21) und des ersten Gehäusekörpers (11) elektrisch verbindet, und die zweite Verbindungsfläche (321) des zweiten leitfähigen Elements (32) das Startende der zweiten Elektrodenplatte (22) und des zweiten Gehäusekörpers (12) elektrisch verbindet.

2. Batterie (100) nach Anspruch 1, **dadurch gekennzeichnet, dass** sich die erste Elektrodenplatte (21) und die zweite Elektrodenplatte (22) in im Wesentlichen gleicher Richtung in einem Spalt zwischen dem ersten leitfähigen Element (31) und dem zweiten leitfähigen Element (32) erstrecken.

3. Batterie (100) nach Anspruch 1, **dadurch gekennzeichnet, dass** die erste Elektrodenplatte (21) einen ersten Stromabnehmer (210) umfasst, wobei der erste Stromabnehmer (210) einen ersten unbeschichteten Bereich (212) und einen ersten beschichteten Bereich (211) umfasst, der erste unbeschichtete Bereich (212) ohne erste Wirkstoffschicht (223) versehen ist, der erste beschichtete Bereich (211) mit der ersten Wirkstoffschicht (223) versehen ist und das erste leitfähige Element (31) elektrisch mit dem ersten unbeschichteten Bereich (212) verbunden ist; und
die zweite Elektrodenplatte (22) einen zweiten Stromabnehmer (220) umfasst, wobei der zweite Stromabnehmer (220) einen zweiten unbeschichteten Bereich (222) und einen zweiten beschichteten Bereich (221) umfasst, der zweite unbeschichtete Bereich (222) ohne zweite Wirkstoffschicht (223) versehen ist, der zweite beschichtete Bereich (221) mit der zweiten Wirkstoffschicht (223) versehen ist und das zweite leitfähige Element (32) elektrisch mit dem zweiten unbeschichteten Bereich (222) verbunden ist.

4. Batterie (100) nach Anspruch 3, **dadurch gekennzeichnet, dass** die zweite Verbindungsfläche (321) des zweiten leitfähigen Elements (32) der ersten Verbindungsfläche (311) zugewandt ist, die erste Verbindungsfläche (311) so eingerichtet ist, dass sie elektrisch mit dem ersten unbeschichteten Bereich (212) verbunden ist, und die zweite Verbindungsfläche (321) so eingerichtet ist, dass sie elektrisch mit dem zweiten unbeschichteten Bereich (222) verbunden ist.

5. Batterie (100) nach Anspruch 3, **dadurch gekennzeichnet, dass** das erste leitfähige Element (31) ferner eine mit der ersten Verbindungsfläche (311) verbundene erste Seitenfläche (312) umfasst, das zweite leitfähige Element (32) ferner eine mit der zweiten Verbindungsfläche (321) verbundene zweite Seitenfläche (322) umfasst, die erste Seitenfläche (312) und die zweite Seitenfläche (322) gemeinsam eine äußere Seitenfläche (300) der leitfähigen Struktur (30) bilden, und ein Teil des ersten unbeschichteten Bereichs (212) und ein Teil des zweiten unbeschichteten Bereichs (222) die äußere Seitenfläche (300) der leitfähigen Struktur (30) umgeben.

6. Batterie (100) nach Anspruch 5, **dadurch gekennzeichnet, dass** sowohl der erste unbeschichtete Bereich (212), der die äußere Seitenfläche (300) der leitfähigen Struktur (30) umgibt, als auch der zweite unbeschichtete Bereich (222), der die äußere Seitenfläche (300) der leitfähigen Struktur (30) umgibt, eine Fläche aufweisen, die kleiner oder gleich der äußeren Seitenfläche (300) der leitfähigen Struktur (30) ist.

7. Batterie (100) nach Anspruch 4, **dadurch gekennzeichnet, dass** sich der Trenner (23) zwischen der ersten Verbindungsfläche (311) und der zweiten Verbindungsfläche (321) befindet und der Trenner (23) das erste leitfähige Element (31) von dem zweiten leitfähigen Element (32) elektrisch isoliert.

8. Batterie (100) nach Anspruch 4, **dadurch gekennzeichnet, dass** zwischen der ersten Verbindungsfläche (311) und der zweiten Verbindungsfläche (321) eine isolierende Klebstoffschicht angeordnet ist und die isolierende Klebstoffschicht das erste leitfähige Element (31) von dem zweiten leitfähigen Element (32) elektrisch isoliert.

9. Batterie (100) nach Anspruch 3, **dadurch gekennzeichnet, dass** in einer Richtung einer Wickelachse der Batteriezelle (20) eine Breite des ersten unbeschichteten Bereichs (212) gleich einer Breite des ersten beschichteten Bereichs (211) ist, und/oder eine Breite des zweiten unbeschichteten Bereichs (222) gleich einer Breite des zweiten beschichteten Bereichs (221) ist.

10. Batterie (100) nach Anspruch 1, **dadurch gekennzeichnet, dass** das erste leitfähige Element (31) einen ersten Endabschnitt (313), der elektrisch mit dem ersten Gehäusekörper (11) verbunden ist, und einen zweiten Endabschnitt (314), der gegenüber dem ersten Endabschnitt (313) angeordnet ist, umfasst; und das zweite leitfähige Element (32) einen dritten Endabschnitt (323), der elektrisch mit dem zweiten Gehäusekörper (12) verbunden ist, und einen vierten Endabschnitt (324), der gegenüber dem dritten Endabschnitt (323) angeordnet ist, umfasst; wobei sich der erste Endabschnitt (313) in einer Richtung einer Wickelachse der Batteriezelle (20) über den vierten Endabschnitt (324) hinaus erstreckt und der dritte Endabschnitt (323) über den zweiten Endabschnitt (314) hinaus erstreckt.

11. Batterie (100) nach Anspruch 10, **dadurch gekennzeichnet, dass** eine Höhe des ersten Endabschnitts (313), der sich über den vierten Endabschnitt (324) hinaus erstreckt, weniger als 2 mm beträgt, und eine Höhe des dritten Endabschnitts (323), der sich über den zweiten Endabschnitt (314) hinaus erstreckt, weniger als 2 mm beträgt.

12. Batterie (100) nach Anspruch 10, **dadurch gekennzeichnet, dass** die Batterie (100) ferner ein erstes festes Element (40) umfasst, das erste feste Element (40) zwischen dem ersten Gehäusekörper (11) und der Batteriezelle (20) angeordnet ist, das erste feste Element (40) so eingerichtet ist, dass es den vierten Endabschnitt (324) von dem ersten Gehäusekörper (11) elektrisch isoliert, und der erste Endabschnitt (313) durch das erste feste Element (40) verläuft und mit dem ersten Gehäusekörper (11) elektrisch verbunden ist.

13. Batterie (100) nach Anspruch 12, **dadurch gekennzeichnet, dass** die Batterie (100) ferner ein zweites festes Element (50) umfasst, das zweite feste Element (50) zwischen dem zweiten Gehäusekörper (12) und der Batteriezelle (20) angeordnet ist, das zweite feste Element (50) so eingerichtet ist, dass es den zweiten Endabschnitt (314) von dem zweiten Gehäusekörper (12) elektrisch isoliert, und der dritte Endabschnitt (323) durch das zweite feste Element (50) verläuft und elektrisch mit dem zweiten Gehäusekörper (12) verbunden ist.

14. Batterie (100) nach Anspruch 1, **dadurch gekennzeichnet, dass** in Richtung einer Wickelachse der Batteriezelle (20) mindestens eines des ersten leitfähigen Elements (31) oder des zweiten leitfähigen Elements (32) mit einem Positionierloch (33) versehen ist.

15. Elektronische Vorrichtung (200), **dadurch gekennzeichnet, dass** die elektronische Vorrichtung (200) die Batterie (100) nach einem der Ansprüche 1 bis 14 umfasst.

## Revendications

1. Une batterie (100), comprenant : un boîtier (10) et une cellule de batterie (20) logée dans le boîtier (10), le boîtier (10) comprenant un premier corps de boîtier (11) et un second corps de boîtier (12) électriquement isolés l'un de l'autre, le second corps de boîtier (12) étant monté sur le premier corps de boîtier (11) ; et la cellule de batterie (20) comprenant une première plaque électrode (21), une seconde plaque électrode (22) et un séparateur (23) situé entre la première plaque électrode (21) et la seconde plaque électrode (22) ;
la batterie (100) comprend en outre un premier membre conducteur (31) et un second membre conducteur (32) logés dans le boîtier (10) et électriquement isolés l'un de l'autre ; et
le premier membre conducteur (31) et le second membre conducteur (32) forment une structure conductrice (30) ; la première plaque électrode (21), le séparateur (23) et la seconde plaque électrode (22) étant enroulés autour de la structure conductrice (30) pour former la cellule de batterie (20) ; et un extrémité de départ de la première plaque électrode (21) et une extrémité de départ de la seconde plaque électrode (22) étant situées entre le premier membre conducteur (31) et le second membre conducteur (32),
l'extrémité de départ de la première plaque électrode (21) et l'extrémité de départ de la seconde plaque électrode (22) étant situées entre le premier membre conducteur (31) et le second membre conducteur (32),
le premier membre conducteur (31) comprenant une première surface de connexion (311), le second membre conducteur (32) comprenant une seconde surface de connexion (321) faisant face à la première surface de connexion (311),
les extrémités de départ de la première plaque électrode (21) et de la seconde plaque électrode (22) étant situées dans un espace entre la première surface de connexion (311) et la seconde surface de connexion (321),
**caractérisé en ce que** la première surface de connexion (311) du premier membre conducteur (31) connecte électriquement l'extrémité de départ de la première plaque électrode (21) et le premier corps de boîtier (11), et la seconde surface de connexion (321) du second membre conducteur (32) connecte électriquement l'extrémité de départ de la seconde plaque électrode (22) et le second corps de boîtier (12).

2. La batterie (100) selon la revendication 1, **caractérisée en ce que**, la première plaque électrode (21) et la seconde plaque électrode (22) s'étendent dans une direction sensiblement identique dans l'espace entre le premier membre conducteur (31) et le second membre conducteur (32).

3. La batterie (100) selon la revendication 1, **caractérisée en ce que**, la première plaque électrode (21) comprend un premier collecteur de courant (210), le premier collecteur de courant (210) comprenant une première région non revêtue (212) et une première région revêtue (211), la première région non revêtue (212) n'étant pas pourvue d'une première couche de substance active (223), la première région revêtue (211) étant pourvue de la première couche de substance active (223), et le premier membre conducteur (31) étant électriquement connecté à la première région non revêtue (212) ; et
la seconde plaque électrode (22) comprenant un second collecteur de courant (220), le second collecteur de courant (220) comprenant une seconde région non revêtue (222) et une seconde région revêtue (221), la seconde région non revêtue (222) n'étant pas pourvue d'une seconde couche de substance active (223), la seconde région revêtue (221) étant pourvue de la seconde couche de substance active (223), et le second membre conducteur (32) étant électriquement connecté à la seconde région non revêtue (222).

4. La batterie (100) selon la revendication 3, **caractérisée en ce que**, la seconde surface de connexion (321) du second membre conducteur (32) fait face à la première surface de connexion (311), la première surface de connexion (311) étant configurée pour être électriquement connectée à la première région non revêtue (212), et la seconde surface de connexion (321) étant configurée pour être électriquement connectée à la seconde région non revêtue (222).

5. La batterie (100) selon la revendication 3, **caractérisée en ce que**, le premier membre conducteur (31) comprend en outre une première surface latérale (312) connectée à la première surface de connexion (311), le second membre conducteur (32) comprenant en outre une seconde surface latérale (322) connectée à la seconde surface de connexion (321), la première surface latérale (312) et la seconde surface latérale (322) formant ensemble une surface latérale extérieure (300) de la structure conductrice (30), et une partie de la première région non revêtue (212) et une partie de la seconde région non revêtue (222) entourent la surface latérale extérieure (300) de la structure conductrice (30).

6. La batterie (100) selon la revendication 5, **caractérisée en ce que**, la première région non revêtue (212) entourant la surface latérale extérieure (300) de la structure conductrice (30) et la seconde région non revêtue (222) entourant la surface latérale extérieure (300) de la structure conductrice (30) ont une surface égale ou inférieure à celle de la surface latérale extérieure (300) de la structure conductrice (30).

7. La batterie (100) selon la revendication 4, **caractérisée en ce que**, le séparateur (23) est situé entre la première surface de connexion (311) et la seconde surface de connexion (321), et le séparateur (23) isole électriquement le premier membre conducteur (31) du second membre conducteur (32).

8. La batterie (100) selon la revendication 4, **caractérisée en ce que**, une couche de colle isolante est disposée entre la première surface de connexion (311) et la seconde surface de connexion (321), et la couche de colle isolante isole électriquement le premier membre conducteur (31) du second membre conducteur (32).

9. La batterie (100) selon la revendication 3, **caractérisée en ce que**, dans une direction de l'axe d'enroulement de la cellule de batterie (20), la largeur de la première région non revêtue (212) est égale à la largeur de la première région revêtue (211), et/ou la largeur de la seconde région non revêtue (222) est égale à la largeur de la seconde région revêtue (221).

10. La batterie (100) selon la revendication 1, **caractérisée en ce que**, le premier membre conducteur (31) comprend une première portion d'extrémité (313) électriquement connectée au premier corps de boîtier (11) et une seconde portion d'extrémité (314) disposée en face de la première portion d'extrémité (313) ; et le second membre conducteur (32) comprend une troisième portion d'extrémité (323) électriquement connectée au second corps de boîtier (12) et une quatrième portion d'extrémité (324) disposée en face de la troisième portion d'extrémité (323) ; dans laquelle, dans une direction de l'axe d'enroulement de la cellule de batterie (20), la première portion d'extrémité (313) dépasse la quatrième portion d'extrémité (324) et la troisième portion d'extrémité (323) dépasse la seconde portion d'extrémité (314).

11. La batterie (100) selon la revendication 10, **caractérisée en ce que**, la hauteur de la première portion d'extrémité (313) dépassant la quatrième portion d'extrémité (324) est inférieure à 2 mm, et la hauteur de la troisième portion d'extrémité (323) dépassant la seconde portion d'extrémité (314) est inférieure à 2 mm.

12. La batterie (100) selon la revendication 10, **caractérisée en ce que**, la batterie (100) comprend en outre un premier élément de fixation (40), le premier élément de fixation (40) étant disposé entre le premier corps de boîtier (11) et la cellule de batterie (20), le premier élément de fixation (40) étant configuré pour isoler électriquement la quatrième portion d'extrémité (324) du premier corps de boîtier (11), et la première portion d'extrémité (313) passant à travers le premier élément de fixation (40) et étant électriquement connectée au premier corps de boîtier (11).

13. La batterie (100) selon la revendication 12, **caractérisée en ce que**, la batterie (100) comprend en outre un second élément de fixation (50), le second élément de fixation (50) étant disposé entre le second corps de boîtier (12) et la cellule de batterie (20), le second élément de fixation (50) étant configuré pour isoler électriquement la seconde portion d'extrémité (314) du second corps de boîtier (12), et la troisième portion d'extrémité (323) passant à travers le second élément de fixation (50) et étant électriquement connectée au second corps de boîtier (12).

14. La batterie (100) selon la revendication 1, **caractérisée en ce que**, dans une direction de l'axe d'enroulement de la cellule de batterie (20), au moins un des premier ou second membres conducteurs (31 ou 32) est pourvu d'un trou de positionnement (33).

15. Un appareil électronique (200), **caractérisé en ce que** l'appareil électronique (200) comprend la batterie (100) selon l'une quelconque des revendications 1 à 14.
